# EUROPEAN PATENT SPECIFICATION

(11) **EP 3 653 068 B1**
(45) Date of publication and mention of the grant of the patent: **14.12.2022**
(21) Application number: 18831889.3
(22) Date of filing: 25.06.2018
(51) Int. Cl.: A41D 13/11, A62B 18/02, D02G 3/32, A62B 23/02, D04C 1/12

(54) **EAR RUBBER PIECE FOR MASK, AND MASK**
OHRKAUTSCHUKTEIL FÜR MASKE UND MASKE
PIÈCE EN CAOUTCHOUC D'OREILLE POUR MASQUE, ET MASQUE

(30) Priority: 13.07.2017 JP 2017137332
(43) Date of publication of application: 20.05.2020
(73) Proprietor: Daio Paper Corporation, Ehime 799-0492 (JP)
(72) Inventor: SAKURAI, Hisayuki, Shikokuchuo-shi Ehime 799-0492 (JP)
(74) Representative: Epping - Hermann - Fischer
(86) International application number: PCT/JP2018/023979
(87) International publication number: WO 2019/012971

(56) References cited:
- FR-A1- 2 534 606
- JP-A- 2006 043 227
- JP-A- 2009 273 910
- JP-A- 2012 029 990
- JP-A- 2012 075 793
- JP-A- 2014 210 153
- JP-A- 2015 042 231
- JP-U- 3 166 806
- JP-U- 3 207 966
- US-A1- 2013 260 629
- US-B1- 6 332 465
- US-B1- 6 332 465

## Description

### Technical Field

The present invention generally relates to a rubber cord for a mask, and the mask.

### Background Art

In order to secure a mask to a wearer's face, strings or elastic materials are used to create ear loops that are fixed to the left and right of the mask and fit around the wearer's ears. Recently, rubber is often used to create the ear loops, such that the mask can be used regardless of the size of the wearer's face.

As rubber used for ear loops (hereinafter referred to as "rubber cords"), it is desirable to use rubber with high tension to sufficiently bring a mask body portion into contact with the wearer's face. However, if high tension rubber is used, the rubber cords bite into the wearer's ears, causing pain. Conversely, if low tension rubber is used to avoid pain, the mask body portion is not sufficiently brought into contact with the wearer's face.

In order to reduce the burden on the wearer's ears, there is known a mask in which adjusters are disposed in the middle of the rubber cords to adjust the length or the strength of rubber cords (see Patent Document 1, for example), and a mask in which elastic members are attached to rubber cords (see Patent Document 2, for example).

### [Related-Art Documents]

### [Patent Documents]

[Patent Document 1] Japanese Unexamined Patent Application Publication No. 2014-210153
[Patent Document 2] Japanese Unexamined Patent Application Publication No. 2015-42231

Further, US 2013/0260629 A1 refers to a yarn or thread that may include a plurality of substantially aligned filaments, with at least ninety-five percent of a material of the filaments being a thermoplastic polymer material. Various woven textiles and knitted textiles may be formed from the yarn or thread. The woven textiles or knitted textiles may be thermal bonded to other elements to form seams. A strand that is at least partially formed from a thermoplastic polymer material may extend through the seam, and the strand may be thermal bonded at the seam. The woven textiles or knitted textiles may be shaped or molded, incorporated into products, and recycled to form other products.
Further, US 6 332 465 B1 discloses a filtration face mask that comprises a mask body that is adapted to cover a mouth and nose of a wearer and that comprises polyolefin containing fibers, and a band that comprises an elastic polyisoprene constituent and a fibrous thermoplastic constituent, the fibrous thermoplastic constituent having a melting point of about 250° C. or less and being selected from the group consisting of polyolefins, substituted polyolefins, and combinations thereof, the elastic polyisoprene constituent and the thermoplastic constituent being knitted, woven, or braided together, the band being attached to the mask body by the application of heat and pressure.

### Summary of the Invention

### Problem to be Solved by the Invention

However, in each of the masks described in the above Patent Documents, a single rubber string is used as a rubber cord. Therefore, the tension of the rubber cord is concentrated in the lengthwise direction of the rubber cord. Thus, all the tension of the rubber cord acts in the stretching direction of the rubber cord, namely in the same direction as the tightening direction of the ear loop. This causes the wearer's ears to be tightened with the rubber cords and causes pain in the ears, thus failing to sufficiently reduce the burden on the wearer's ears.

It is an object of the present invention to provide a rubber cord for a mask and the mask, in which the burden on a wearer's ears can be reduced.

### Means to Solve the Problem

According to the invention, a rubber cord for a mask and for attachment to the left and right of a mask body portion is provided. The rubber cord is formed by braiding a plurality of rubber strings. A fibrous member is wound around each of the plurality of rubber strings. With the above-configuration, it is possible to provide the rubber cord for the mask, in which the burden on a wearer's ears can be reduced and in which wearability is improved.

According to an embodiment the plurality of rubber strings are braided so as to be arranged obliquely relative to a lengthwise direction of the rubber cord. With this configuration, it is possible to provide the rubber cord for the mask, in which the burden on a wearer's ears can be reduced.

According to an embodiment the rubber cord comprises a plurality of sets of rubber strings, wherein each of the plurality of sets of rubber strings is formed by bundling a plurality of rubber strings, and the plurality of sets of rubber strings are braided. With this configuration, it is possible to provide the rubber cord for the mask, in which the burden on a wearer's ears can be reduced. According to an embodiments a mask is provided including the rubber cord according to any one of the above embodiments.

### Effects of the Invention

According to the present invention, it is possible to provide a rubber cord for a mask and the mask, in which the burden on a wearer's ears can be reduced.

### Brief Description of the Drawings

FIG. 1 is a perspective view illustrating a mask according to an embodiment;
FIG. 2 is a front view illustrating the mask according to the embodiment;
FIG. 3 is a cross-sectional view taken through III-III of FIG. 2;
FIG. 4 is a diagram illustrating a method for braiding a rubber cord; and
FIG. 5 is a diagram illustrating an example in which a fibrous member is wound around a rubber string.

### Mode for Carrying out the Invention

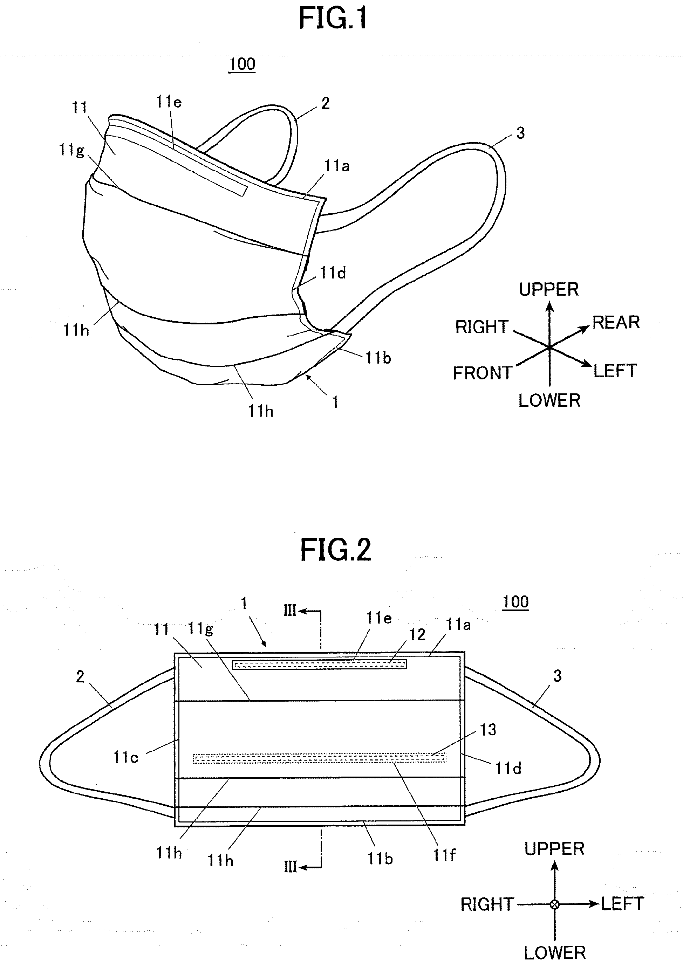

In the following, specific aspects of a mask 100, which are embodiments of the present invention, will be described with reference to FIG. 1 through FIG. 4. However, the technical scope of the present invention is not limited to the illustrated examples, and is determined based on the claims.

In the following, the front, rear, left, right, upper, and lower sides are defined with respect to a wearer of the mask.

### [Description of Configuration]

### (Overall Configuration)

As illustrated in FIG. 1 and FIG. 2, the mask 100 includes a mask body portion 1 that covers the lower face including the nose, mouth, and chin of the wearer, a right ear loop 2 that fits to the right ear of the wearer, and a left ear loop 3 that fits to the left ear of the wearer. When the mask 100 is worn, the rear surface side of the mask body portion 1 contacts the wearer's face.

### (Mask Body Portion)

As illustrated in FIG. 2, the mask body portion 1 includes a sheet portion 11 formed by three or more sheet materials, a nose support member 12 attached near the upper end of the sheet portion 11, and a mouth support member 13 attached near the center in the upper-lower direction of the sheet portion 11.

### (Sheet Portion)

The sheet portion 11 is a sheet-like member formed in an approximately rectangle shape when viewed from the front side of the mask 100 as illustrated in FIG. 2, and is formed by stacking a plurality of sheet materials.

The sheet portion 11 has a length of 120 mm to 210 mm, and preferably 145 mm to 175 mm in the left-right direction, and has a width of 70 mm to 100 mm, and preferably 80 mm to 90 mm in the upper-lower direction.

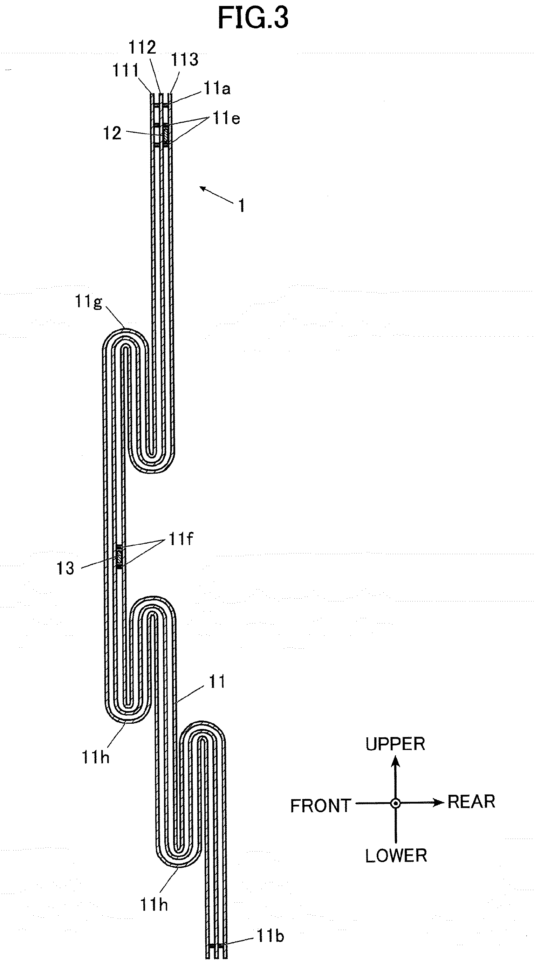

As illustrated in FIG. 3, the sheet portion 11 is formed by stacking sheet materials, namely by stacking an outer-side non-woven fabric 111 located farthest from the skin of the wearer, a filter 112, and a wearer-side non-woven fabric 113 located closest to the skin of the wearer in this order. Examples of the sheet materials include a polypropylene spun-bonded non-woven fabric, a polyethylene spun-bonded non-woven fabric, and a nylon spun-bonded non-woven fabric. Examples of the filter include a polypropylene melt-blown non-woven fabric and a rayon spun-bonded non-woven fabric. Further, a moisturizing agent, a softening agent, and an antibacterial may be applied to the wearer-side non-woven fabric 113.

Most preferably, a polypropylene spun-bonded non-woven fabric is used as the outer-side non-woven fabric 111, a nylon spun-bonded woven fabric treated with a moisturizing agent is used as the wearer-side non-woven fabric 113, and a polypropylene melt-blown non-woven fabric is used as the filter 112 interposed therebetween.

Portions near the upper and lower ends and the left and right ends of the outer-side non-woven fabric 111, the filter 112, and the wearer-side non-woven fabric 113, which form the sheet portion 11, are welded in the front-rear direction by heat, ultrasound, or the like. As a result, an upper end connection portion 11a is formed near the upper ends, a lower end connection portion 11b is formed near the lower ends, a right end connection portion 11c is formed near the right ends, and a left end connecting portion 11d is formed near the left ends.

In order to attach the nose support member 12 to the upper side of the sheet portion 11, a peripheral connecting portion 11e is formed by welding the outer-side non-woven fabric 111, the filter 112, and the wearer-side non-woven fabric 113 in the front-back direction by heat, ultrasound, or the like, so as to surround the nose support member 12, which will be described below.

The peripheral connecting portion 11e desirably has a shape that approximately matches the shape of the nose support member 12 when viewed from the front side of the mask 100. However, a small gap may be formed around the nose support member 12, and the nose support member 12 may be moved.

In order to attach the mouth support member 13 near the center in the front-rear direction of the sheet portion 11, a peripheral connecting portion 11f is formed by welding the filter 112 and the wearer-side non-woven fabric 113 in the front-back direction by heat, ultrasound, or the like, so as to surround the mouth support member 13, which will be described below.

The peripheral connecting portion 11f desirably has a shape that approximately matches the shape of the mouth support member 13 when viewed from the front side of the mask 100. However, a small gap may be formed around the mouth support member 13, and the mouth support member 13 may be moved.

Further, in the examples of FIG. 1 and FIG. 2, the connecting portions 11a through 11f are separately provided; however, the present invention is not limited thereto. One connecting portion may serve as a plurality of connecting portions. For example, the upper end connection portion 11a may overlap the upper portion of the peripheral connecting portion 11e. In this manner, the upper end connection portion 11a may also serve as the upper portion of the peripheral connecting portion 11e.

Further, the connecting portions are not required to be formed by heat-welding, ultrasonic welding, or the like, as long as the sheet materials are bonded in the front-rear direction of the sheet portion 11.

Further, in FIG. 1 and FIG. 2, the connecting portions are formed by continuous lines; however, the present invention is not limited thereto. The connecting portions may be formed by dashed lines.

### (Pleats)

As illustrated in FIG. 3, the sheet portion 11 is folded in the upper-lower direction, thereby forming an upper pleat 11g and lower pleats 11h and 11h on the front side, as illustrated in FIG. 1 through FIG. 3. When the mask 100 is worn, these pleats are expanded in the upper-lower direction, and the sheet portion 11 is formed in a three-dimensional mountain shape that projects outward. Accordingly, the lower face including the nose, mouth, and chin of the wearer is covered.

As illustrated in FIG. 1 through FIG. 3, the upper pleat 11g is a folded portion formed on the front side of the sheet portion 11 and extending upward relative to the center in the upper-lower direction of the sheet portion 11. The upper pleat 11g can be expanded in the upper-lower direction. In the present embodiment, the upper pleat 11g is provided at one location of the sheet portion 11.

As illustrated in FIG. 1 through FIG. 3, the lower pleats 11h and 11h are folded portions formed on the front side of the sheet portion 11 and extending downward relative to the center in the upper-lower direction of the sheet portion 11. The lower pleats 11h and 11h can be expanded in the upper-lower direction. In the present embodiment, the lower pleats 11h and 11h are provided at two locations of the sheet portion 11.

The upper pleat 11g and the lower pleats 11h and 11h are arranged, such that an area that includes the center in the upper-lower direction of the sheet portion 11 and located between the upper pleat 11g and the upper-side lower pleat 11h, of the lower pleats 11h and 11h, becomes largest. Specifically, the width in the upper-lower direction of the above-described area is desirably greater than or equal to one third of the width in the upper-lower direction of the sheet portion 11. Accordingly, a space between the mouth of the wearer and the mask can be readily secured.

Further, it is desirable to arrange the upper pleat 11g and the lower pleats 11h and 11h such that all intervals are different arrangement intervals. By changing arrangement intervals of the pleats, the pleats can be arranged at appropriate positions.

Note that the arrangement intervals of the pleats include an interval between the upper pleat 11g and the upper edge of the mask, and an interval between the lower pleat 11h formed on the lower side and the lower edge of the mask.

### (Nose support member)

As illustrated in FIG. 2, the nose support member 12 is provided along the upper edge of the sheet portion 11 in order to prevent a gap between the upper portion of the mask body portion 1 and the nose of the wearer.

The nose support member 12 is a member having plasticity and long in the left-right direction. The length in the left-right direction of the nose support member 12 is smaller than that of the sheet portion 11. The nose support member 12 has a length of 80 mm to 135 mm and preferably of 90 mm to 120 mm in the left-right direction, a width of 3 mm to 5 m in the upper-lower direction, and a thickness of 0.5 mm to 1.0 mm in the front-rear direction.

The nose support member 12 may be formed of any material having plasticity. Examples of the material of the nose support member 12 include a polypropylene resin, a polyethylene resin, and a polyethylene terephthalate resin. Most preferably, a polypropylene resin is used.

The nose support member 12 is disposed between the filter 112 and the wearer-side non-woven fabric 113. The peripheral connecting portion 11e is formed at the upper, lower, left, and right ends of the nose support member 12 by welding the outer-side non-woven fabric 111, the filter 112, and the wearer-side non-woven fabric 113 in the front-back direction by heat, ultrasound, or the like, so as to surround the nose support member 12. As a result, the nose support member 12 is attached to the sheet portion 11.

Note that the nose support member 12 may be attached to the sheet portion 11 at any position by any attachment method, as long as a gap between the upper portion of the mask body portion 1 and the nose of the wearer can be avoided.

For example, similar to the mouth support member 13 as will be described below, the nose support member 12 may be attached to the sheet portion 11 by forming the peripheral connecting portion 11e without welding the outer-side non-woven fabric 111. Further, for example, the nose support member 12 may be disposed between the outer-side non-woven fabric 111 and the filter 112.

### (Mouth support member)

The mouth support member 13 functions to maintain the shape of the mask body portion 1 in conformity with the shape of the mouth of the wearer. As illustrated in FIG. 2 and FIG. 3, the mouth support member 13 is attached near the center in the upper-lower direction of the sheet portion 11. Specifically, the mouth support member 13 is attached at a position between the upper pleat 11g and the upper-side lower pleat 11h of the lower pleats 11h and 11h.

It is desirable to attach the mouth support member 13 at a position shifted downward by approximately 5 mm to 10 mm from the center in the upper-lower direction of the sheet portion 11. However, the present invention is not limited thereto, and the mouth support member 13 may be attached to any position as long as the shape of the mask body portion 1 can be maintained in conformity with the shape of the mouth of the wearer.

The mouth support member 13 is a member having plasticity and long in the left-right direction. As illustrated in FIG. 2, the length in the left-right direction of the nose mouth support member 13 is slightly smaller than that of the sheet portion 11. The mouth support member 13 has a length of 100 mm to 150 mm and preferably of 115 mm to 145 mm in the left-right direction, a width of 3 mm to 5 mm in the upper-lower direction, and a thickness of 0.5 mm to 1.0 mm in the front-rear direction.

The mouth support member 13 may be formed of any material having plasticity. Similar to the nose support member 12, examples of the material of the mouth support member 13 include a polypropylene resin, a polyethylene resin, and a polyethylene terephthalate resin. Most preferably, a polypropylene resin is used.

As illustrated in FIG. 3, the mouth support member 13 is disposed between the filter 112 and the wearer-side non-woven fabric 113. The peripheral connecting portion 11f is formed at the upper, lower, left, and right ends of the mouth support member 13 by welding the filter 112 and the wearer-side non-woven fabric 113 in the front-back direction by heat, ultrasound, or the like, so as to surround the mouth support member 13. As a result, the mouth support member 13 is attached to the sheet portion 11.

Accordingly, the mouth support member 13 is fixed to the filter 112 and the wearer-side non-woven fabric 113. That is, while the filter 112, the wearer-side non-woven fabric 113, and the mouth support member 13 are fixed to each other near the mouth of the wearer, the outer-side non-woven fabric 111 is not fixed to any member other than the four side ends of the sheet portion 11.

The mask body portion 1 may have any configuration, as long as the mask body portion 1 covers the target area of the wearer and functions as the mask when the ear loops are attached.

### (Ear Loops)

The right ear loop 2 and the left ear loop 3 are formed by attaching rubber cords 200 to the mask body portion 1.

Specifically, as illustrated in FIG. 1 and FIG. 2, the right ear loop 2 is formed on the right side of the mask body portion 1 by welding one end of a rubber cord 200 to the upper right end of the sheet portion 11, and the other end of the rubber cord 200 to the lower right end of the sheet portion 11 by heat, ultrasound, or the like. Further, the left ear loop 3 is formed on the left side of the mask body portion 1 by welding one end of a rubber cord 200 to the upper left end of the sheet portion 11, and the other end of the rubber cord 200 to the lower left end of the sheet portion 11 by heat, ultrasound, or the like.

### (Rubber cords)

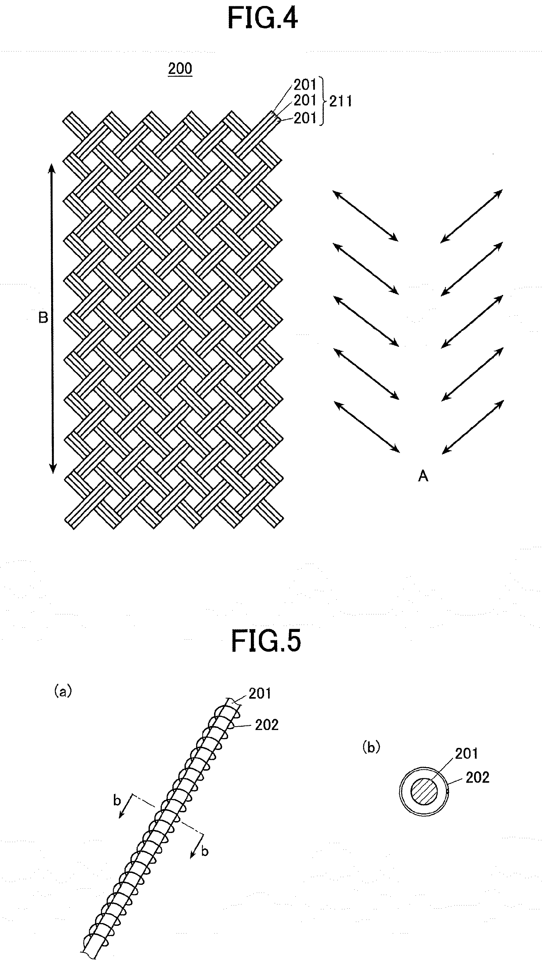

A rubber cord 200 is formed by braiding a plurality of sets of rubber strings 211 formed by rubber strings 201, as illustrated in FIG. 4.

### (Rubber strings)

A rubber string 201 is a thin string-shaped member made of an elastic material. Examples of the material of the rubber string 201 include latex in the case of natural rubber and polyurethane in the case of synthetic rubber. All of the rubber strings 201 may have the same thickness. Alternatively, different kinds of rubber strings 201 having different thicknesses may be used.

### (Sets of Rubber strings)

A set of rubber strings 211 is formed by bundling a predetermined number of rubber strings 201, as illustrated in FIG. 4. The set of rubber strings 211 may be formed only by bundling a plurality of rubber strings 201. Alternatively, the set of rubber strings 211 may be formed by being twisted and gathered. In the example of FIG. 4, one set of rubber strings 211 is formed by three rubber strings 201; however, the number of rubber strings 201 forming each set of rubber strings 211 is not limited thereto. All of the rubber strings 201 forming each set of rubber strings 211 may have the same thickness. Alternatively, different kinds of rubber strings 201 having different thicknesses may be used.

As illustrated in FIG. 4, the rubber cord 200 is formed by braiding, for example, by interweaving, the plurality of sets of rubber strings 211. As a result, the sets of rubber strings 211 are arranged obliquely (in arrow directions indicated by A in FIG. 4) relative to the lengthwise direction (indicated by an arrow B in FIG. 4) of the rubber cord 200, and also braided such that the sets of rubber strings 211 cross each other. Braiding or interweaving the plurality of sets of rubber strings 211 refers to braiding the N number (N is an integer greater than or equal to 3) of sets of rubber strings 211 into one.

Furthermore, the rubber cord 200 is formed such that all the rubber strings 201 extend the entire length of the rubber cord 200. Accordingly, the rubber strings 201 forming the sets of rubber strings 211 are braided so as to be arranged obliquely relative to the lengthwise direction of the rubber cord 200.

Specifically, one set of rubber strings 211 is desirably formed by one to four rubber strings 201, and the rubber cord 200 is desirably formed by braiding three to fifteen sets of rubber strings 211.

Further, the rubber cord 200 is desirably formed in a flat belt shape with a width of approximately 5 mm to 7 mm.

The rubber cord 200 may be formed only by the rubber strings 201 as described above. Alternatively, as illustrated in FIG. 5, a fibrous member 202 made of polyester may be wound around each of the rubber strings 201, and then, the rubber strings 201 may be braided. In this case, the rubber cord 200 can be made soft in texture, thereby further improving wearability. Further, the fibrous member 202 winding around each of the rubber strings 201 may be made of nylon other than polyester. Further, the rubber cord 200 may be made softer and fluffy in texture by using crimped fibers.

### [Description of Production Method]

(1) For example, instead of yarns, sets of rubber strings 211 are wound onto bobbins of a braiding machine used to produce braids for cloth. Then, the sets of rubber strings 211 are braided into the rubber cord 200.
(2) The sheet materials are stacked from the side farthest from the wearer's skin. Specifically, the outer-side non-woven fabric 111, the filter 112, and the wearer-side non-woven fabric 113 are stacked in this order. Then, the nose support member 12 and the mouth support member 13 are disposed at predetermined positions between the filter 112 and the wearer-side non-woven fabric 113.
(3) The peripheral connecting portion 11e is formed at the upper, lower, left, and right ends of the nose support member 12 by welding the outer-side non-woven fabric 111, the filter 112, and the wearer-side non-woven fabric 113 in the front-back direction by heat, ultrasound, or the like. Further, the peripheral connecting portion 11f is formed at the upper, lower, left, and right ends of the mouth support member 13 by welding the filter 112 and the wearer-side non-woven fabric 113 in the front-back direction by heat, ultrasound, or the like.
(4) The stacked sheet materials are folded, thereby forming the upper pleat 11g and the lower pleats 11h and 11h.
(5) Portions near the upper, lower, left, and right ends of the folded sheet materials are welded by heat, ultrasound, or the like, thereby forming the upper end connection portion 11a, the lower end connection portion 11b, the right end connecting portion 11c, and the left end connecting portion 11d.
(6) The respective ends of a rubber cord 200 are welded to the upper and lower right ends of the sheet portion by heat, ultrasound, or the like, thereby forming the right ear loop 2. The respective ends of a rubber cord 200 are welded to the upper and lower left ends of the sheet portion by heat, ultrasound, or the like, thereby forming the left ear loop 3.

### [Description of Effects]

In the mask 100 according to the present embodiment, the right ear loop 2 and the left ear loop 3 are formed by the respective rubber cords 200 formed by braiding the plurality of rubber strings 201 to be arranged obliquely relative to the lengthwise direction of the rubber cord 200. Therefore, as illustrated in FIG. 4, the directions A in which the tension of the rubber strings 201 are applied become different from the direction B in which the rubber cord 200 stretches when the mask 100 is worn. Thus, the force is dispersed and the burden of the right ear loop 2 and the left ear loop 3 on the wearer's ears can be reduced.

Each set of rubber strings 211 is preferably formed by a plurality of rubber strings 201, but may be formed by one rubber string 201. Even if each set of the plurality of rubber strings 211 is formed by one rubber string 201, braiding the plurality of sets of rubber strings 211 allows the directions A, in which the tension of the rubber strings 201 are applied, to be made different from the direction B, in which the rubber cord 200 stretches when the mask 100 is worn. Thus, the force is dispersed, and the burden of the right ear loop 2 and the left ear loop 3 on the wearer's ears can be reduced.

In the present embodiment, it is preferable to form a rubber cord 200 by bundling a predetermined number of rubber strings 201 to form each set of plurality of rubber strings 211, and braiding the plurality of sets of rubber strings 211. As a result, the width and thickness of the rubber cord 200 can be increased, as compared to when multiple rubber strings 201 are braided without being bundled, namely as compared to when each rubber string set 211 is formed by one rubber string 201.

If a thick rubber string having the same width and thickness as those of each set of the rubber strings 211 were to be used and such thick rubber strings were braided, the rubber cord 200 would become stiff in texture. In the present embodiment, a plurality of rubber strings 201 are bundled into each set of rubber strings 211, and the plurality of sets of rubber strings 201 are braided, thus allowing the rubber cord 200 to be soft in texture.

### [Examples]

Next, results of examples and comparative examples will be described, in which the tensile strength of rubber cords was measured, and also the actual use of the rubber cords was evaluated. Although the present invention will be described with reference to the following examples, the present invention is not limited to these examples.

### (Example 1)

Three rubber strings 201 each made of natural rubber (latex) and having a thickness of 550 dtex were bundled into one set of rubber strings 211. In this way, a total of six sets of rubber strings 211 were formed. The six sets of rubber strings 211 were braided into a rubber cord 200.

### (Example 2)

Four rubber strings 201 each made of natural rubber (latex) and having a thickness of 550 dtex were bundled into one set of rubber strings 211. In this way, a total of six sets of rubber strings 211 were formed. The six sets of rubber strings 211 were braided into a rubber cord 200.

### (Example 3)

Five rubber strings 201 each made of natural rubber (latex) and having a thickness of 550 dtex were bundled into one set of rubber strings 211. In this way, a total of six sets of rubber strings 211 were formed. The six sets of rubber strings 211 were braided into a rubber cord 200.

### (Comparative Example 1)

Eighteen rubber strings 201 each made of natural rubber (latex) and having a thickness of 550 dtex were bundled in a straight line to obtain a rubber cord.

### (Comparative Example 2)

Twenty four rubber strings 201 each made of natural rubber (latex) and having a thickness of 550 dtex were bundled in a straight line to obtain a rubber cord.

### (Comparative Example 3)

Thirty rubber strings 201 each made of natural rubber (latex) and having a thickness of 550 dtex were bundled in a straight line to obtain a rubber cord.

The following tests were performed by using the rubber cords according to the above-described examples and comparative examples.

### (Measurement of Tensile Strength)

The tensile strength of the rubber cords according to the above-described examples and comparative examples were measured using a tensile testing machine, in which the rubber cords were stretched by 200% (100 mm) at a distance between chucks of 50 mm and a rate of 300 mm/minute. As the tensile testing machine, TENSILON RTG-1210 available from A&D was used.

### (Actual Use Evaluation)

Masks for actual use evaluation were obtained by attaching the rubber cords according to the examples and the comparative examples to mask body portions 1. Five users actually wore the masks for three hours, and evaluated the wearability of the masks, whether the masks did not easily slip off, and the long-time use of the masks.

Specifically, a weight of 17 gsm of a polypropylene spun-bonded non-woven fabric was used as an outer-side non-woven fabric 111, a weight of 20 gsm of a polypropylene melt-blown non-woven fabric was used as a filter 112, a weight of 20 gsm of a nylon spun-bonded non-woven fabric was used as a wearer-side non-woven fabric 113, and a sheet portion 11 with a length of 175 mm in the left-right direction and a width of 90 mm in the upper-lower direction was formed. Then, a nose support member 12 and a mouth support member 13 were attached to the sheet portion 11 to obtain a mask body portion 1. Rubber cords were attached to the left and right sides of the mask body portion 1, thereby forming a right ear loop 2 and a left ear loop 3. In the above manner, each of the masks for actual use evaluation was created.

In the tests, results B in the comparative example 1 were used as reference, and an excellent result was evaluated as AA, a good result was evaluated as A, and a poor result was evaluated as C.

Table 1 indicates test results.

**[Table 1]**

| | ONE RUBBER STRING | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|---|
| TENSILE STRENGTH (cN) | 23.1 | 286.19 | 421.54 | 507.5 | 415.8 | 554.4 | 693 |
| WEARABILITY | - | A | AA | AA | B | B | C |
| NOT EASILY SLIP OFF | - | B | AA | AA | B | A | AA |
| LONG-TIME USE | - | B | AA | A | B | C | C |

### (Evaluation)

The comparison between the example 1 and the comparative example 1, the comparison between the example 2 and the comparative example 2, and the comparison between the example 3 and the comparative example 3 indicate that, even if the same number of rubber strings are used, it is possible to reduce the tensile strength in the lengthwise direction of a rubber cord by braiding and arranging rubber strings obliquely relative to the lengthwise direction of the rubber cord. Thus, tightening by the rubber cord can be decreased, and the burden on wearer's ears can be reduced.

When the comparative example 1 is compared with the example 2, the tensile strength in the comparative example 1 is approximately the same as that in the example 2, but the example 2 is highly superior in all of the evaluation items "wearability", "not easily slip off", and "long-time use". Further, when the comparative example 2 is compared with the example 3, the tensile strength in the comparative example 2 is not significantly different from that in the example 3, but the example 3 is highly superior in all of the evaluation items "wearability", "not easily slip off", and "long-time use".

Therefore, it can be seen that, even if the tensile strength in the lengthwise direction of two rubber cords is the same, one rubber cord in which rubber strings are arranged obliquely relative to the lengthwise direction of the rubber cord is superior to the other rubber cord in respect of "wearability", "not easily slip off", and "long-time use".

### Description of the Reference Numeral

100 mask
1 mask body portion
200 rubber cord (rubber cord for mask)
201 rubber string

## Claims

1. A rubber cord (200) for a mask and for attachment to left and right of a mask body portion, the rubber cord (200) comprising,
a plurality of rubber strings (201), the plurality of rubber strings (201) being braided, **characterized in that** a fibrous member (202) is wound around each of the plurality of rubber strings (201).

2. The rubber cord (200) according to claim 1, wherein the plurality of rubber strings (201) are braided so as to be arranged obliquely relative to a lengthwise direction of the rubber cord (200).

3. The rubber cord (200) according to claim 1, further comprising a plurality of sets (211) of rubber strings (201), wherein each of the plurality of sets (211) of rubber strings (201) is formed by bundling a plurality of rubber strings (201), and the plurality of sets (211) of rubber strings (201) are braided.

4. The mask including the rubber cord (200) according to claim 1.

## Patentansprüche

1. Gummiband (200) für eine Maske und zur Befestigung links und rechts an einem Maskenkörperteil, umfassend
eine Mehrzahl von Gummischnüren (201), wobei die Mehrzahl von Gummischnüren (201) geflochten sind, **dadurch gekennzeichnet, dass** ein Faserelement (202) um jede der Mehrzahl von Gummischnüren (201) gewickelt ist.

2. Gummiband (200) nach Anspruch 1, wobei die Mehrzahl von Gummischnüren (201) so geflochten sind, dass sie schräg zu einer Längsrichtung des Gummibands (200) angeordnet sind.

3. Gummiband (200) nach Anspruch 1, ferner umfassend eine Mehrzahl von Sätzen (211) von Gummischnüren (201), wobei jeder der Mehrzahl von Sätzen (211) von Gummischnüren (201) durch Bündeln einer Mehrzahl von Gummischnüren (201) gebildet ist und die Mehrzahl von Sätzen (211) von Gummischnüren (201) geflochten sind.

4. Maske mit dem Gummiband (200) nach Anspruch 1.

## Revendications

1. Cordon en caoutchouc (200) pour masque destiné à être attaché à gauche et droite d'une partie corps de masque, le cordon de caoutchouc (200) comprenant
une pluralité de fils de caoutchouc (201), la pluralité de fils de caoutchouc (201) étant tressés,
**caractérisé en ce qu'**un élément fibreux (202) est enroulé autour de chacun de la pluralité de fils de caoutchouc (201).

2. Le cordon de caoutchouc (200) selon la revendication 1,
sachant que la pluralité de fils de caoutchouc (201) sont tressés de manière à être agencés obliquement par rapport à une direction longitudinale du cordon de caoutchouc (200) .

3. Le cordon de caoutchouc (200) selon la revendication 1,
comprenant en outre une pluralité de jeux (211) de fils de caoutchouc (201), sachant que chacun de la pluralité de jeux (211) de fils de caoutchouc (201) est formé par groupement d'une pluralité de fils de caoutchouc (201), et la pluralité de jeux (211) de fils de caoutchouc (201) sont tressés.

4. Le masque incluant le cordon de caoutchouc (200) selon la revendication 1.
